## Europäisches Patentamt

## European Patent Office

## Office européen des brevets

(19)

(11) Veröffentlichungsnummer: **0 100 884**
**B1**

(12)

# EUROPÄISCHE PATENTSCHRIFT

(45) Veröffentlichungstag der Patentschrift:
27.04.88

(51) Int. Cl.⁴: **B 23 Q 35/40**

(21) Anmeldenummer: **83106707.9**

(22) Anmeldetag: **06.07.83**

(54) **Fotoelektrische Abtasteinrichtung für Bearbeitungsmaschinen.**

(30) Priorität: **07.08.82 DE 3229556**

(43) Veröffentlichungstag der Anmeldung:
**22.02.84 Patentblatt 84/8**

(45) Bekanntmachung des Hinweises auf die Patenterteilung:
**27.04.88 Patentblatt 88/17**

(84) Benannte Vertragsstaaten:
**FR GB IT**

(56) Entgegenhaltungen:
**DE-A-2 207 873**
**DE-A-2 365 209**
**DE-A-2 630 188**
**DE-A-2 652 364**

**SIEMENS-ZEITSCHRIFT, Band 45, Nr. 10, 1971, Berlin; G. HATZINGER "Anwendung iptoelektronischer Bauelemente", Seiten 686-689**

(73) Patentinhaber: **MESSER GRIESHEIM GMBH, Hanauer Landstrasse 330, D-6000 Frankfurt/Main 1 (DE)**

(72) Erfinder: **Bratengeier, Horst, Höllgartenstrasse 9, D-6072 Dreieich (DE)**

EP 0 100 884 B1

## Beschreibung

Die Erfindung betrifft eine fotoelektrische Abtasteinrichtung zum geregelten Nachfahren von vorgegebener Bahnen für Bearbeitungsmaschinen, insbesondere Brennschneidmaschinen mit mindestans einem Lichtempfänger, der mit einem Potentiometer zur Einstellung des Arbeitspunktes zusammengeschaltet ist.

Mit der vorgegebenen fotoelektrischen Abtasteinrichtung, z.B. nach der DE-A-2 630 188, sollen an Vorlagen, die in Form von Zeichnungen oder Schablonen vorliegen, der Linien-/Kantenverlauf abgetastet und mittels elektrischer Steuerkreise und Koordinatenmotore in Werkzeuabewegungen umgesetzt werden. Bei solchen fotoelektrischen Abtasteinrichtungen werden einerseits für die Auslegung des Lichtempfänger-Arbeitspunktes und damit für die Ansprechschwelle der Anschnittsteuerung und Abschaltung der Maschine Normal-Lichtverhältnisse angenommen um zu einer Dimensionierung der die Anschnittsteuerung bildenden Bauteile zu gelangen, andererseits sind die bei der Festlegung des betriebsmäßigen Arbeitspunktes zugrundegelegten Parameter der Normal-Lichtverhältnisse in der Praxis nicht immer gegeben, z.B. aufgrund von unterschiedlichen Zeichnungsunterlagen.

Diesen sich ändernden Betriebsverhältnissen wird in der Praxis bisher dadurch Rechnung getragen, daß der sich bei beispielsweise Unterschreitung der Normal-Lichtverhältnisse automatisch einstellende Ausfall der Anschnittsteuerung durch eine, von einem Servicetechniker ausgeführte Korrektur des betriebsmäßigen Lichtempfänger-Arbeitpunktes auf die jeweiligen Standortverhältnisse vermieden/behoben wird. Dabei wird die von dem Lichtempfänger gelieferte Spannung, die proportional abhängig vom Lichteinfall in den Lichtempfänger ist, mittels eines Meßgerätes gemessen und mit einem, mit dem Lichtempfänger verbundenen Potentiometer derart eingestellt, daß die dem betriebsmäßigen Arbeitspunkt zugrundeliegende Betriebsspannung anliegt.

Dabei hat es sich jedoch in der Praxis gezeigt, daß bei der Verwendung unterschiedlicher Papiersorten mit verschiedenem Weißgrad als Zeichnungsvorlage die Anschnittsteuerung der fotoelektrischen Abtasteinrichtung weiterhin automatisch abschaltet. Dies wird auf den Unterschied im Reflexions-/ Remissionsgrad sowie den Farbstich der Zeichnungsvorlage und den damit verbundenen von den eingestellten Normal-Lichtverhältnissen abweichenden Lichtverhältnissen zurückgeführt.

Dieser Ausfall der Anschnittssteuerung führt zu Betriebsstillstandzeiten der Brennschneidmaschine, die erst durch Neueinstellung des betriebsmäßigen Arbeitspunktes aufgehoben werden können.

Der Erfindung liegt die Aufgabe zugrunde, die obengenannten Nachteile zu vermeiden und insbesondere eine fotoelektrische Abtasteinrichtung der obengenannten Gattung so auszubilden, daß die Erkennung des betriebsmäßigen Arbeitspunktes ohne Meßgerät ebenso ermöglicht wird, wie die einfache Einstellung des betriebsmäßigen Arbeitspunktes ohne direkten Eingriff in die Abtaststeuerung der Anlage, so daß der betriebsmäßige Arbeitspunkt auch von ungeschultem Personal erkannt/eingestellt werden kann.

Diese Aufgabe wird erfindungsgemäß dadurch gelöst, daß dem Potentiometer ein Anzeigeelement zur optischen Anzeige des Arbeitspunktes zugeordnet ist, wobei das Patentiometen zwecks Einstellung zugänglich ist.

In vorteilhafter Ausbildung ist das Potentiometer an der Schalttafel der Abtaststeuerung befestigt.

Durch den von außen an der Schalttafel der Abtaststeuerung erkennbaren und einstellbaren betriebsmäßigen Arbeitspunkt werden Betriebsstillstandzeiten der mit der fotoelektrischen Abtasteinheit verbundenen Brennschneidmaschine verhindert, da durch die erfindungsgemäße Einrichtung über die Anzeige die Einstellung des betriebsmäßigen Arbeitspunktes vom Bedienungspersonal der Bearbeitungsmaschine schnell und ohne besondere elektrische Kenntnisse vorgenommen werden kann.

Ein Ausführungsbeispiel der Erfindung ist in der Zeichnung dargestellt und wird im folgenden unter Hinweis auf weitere vorteilhafte Merkmale näher erläutert.

Es veranschaulicht:

Fig. 1 die Schalttafel der Abtaststeuerung mit der erfindungsgemäßen Einstell-und Anzeige-Einrichtung des betriebsmaßigen Arbeitspunktes

Fig. 2 das elektrische Schaltbild der Einstell-und Anzeige-Einrichtung

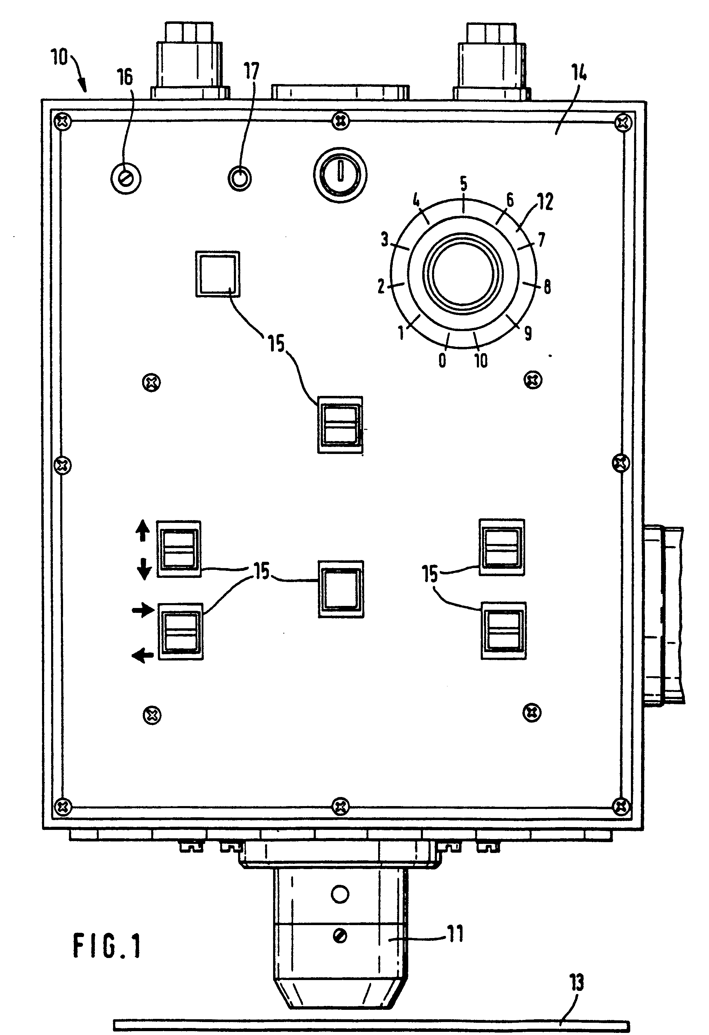

In Fig. 1 ist eine an sich bekannte, von der Anmelderin beispielsweise unter der Bezeichnung KS 09 vertriebene fotoelektrische Abtasteinrichtung einer Koordinaten-Brennschneidmaschine in ihrer Gesamtheit mit 10 bezeichnet. An der elektronisch arbeitenden Abtasteinrichtung 10 ist ein fotoelektrischer Abtastkopf 11 befestigt.

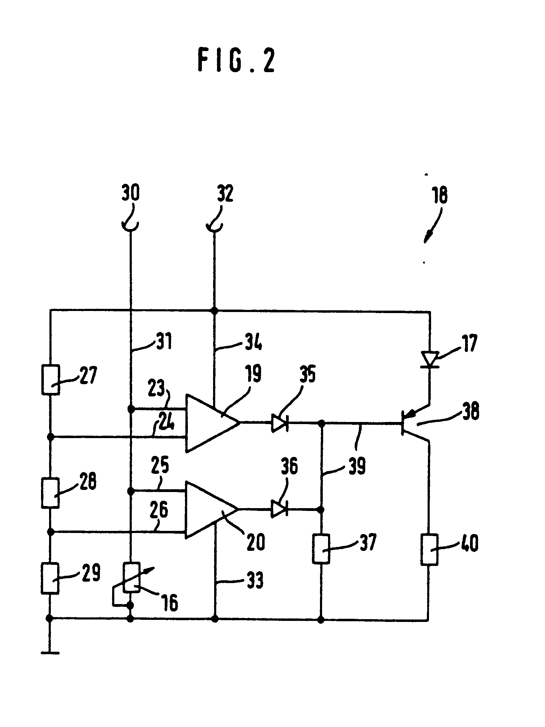

Über Drehknopf 12 ist die Schneidgeschwindigkeit und über weitere an der Schalttafel 14 angeordnete Schaltelemente 15 der Umfahrungssinn, der automatische Anschnitt, die Anfahrrichtung und die Koordinatenrichtung schalt- und/oder einstellbar. Zusätzlich zu den Schaltelementen 15 ist an der Schalttafel 14 der Abtasteinrichtung 10 ein Potentiometer 16 befestigt, an dem der betriebsmäßige Arbeitspunkt von außen ein/verstellbar ist. Mit dem Potentiometer 16 ist gemäß dem Schaltbild der Fig. 2 ein Anzeigeelement 17 zur optischen Anzeige, vorzugsweise eine Leuchtdiode, zur Anzeige des betriebsmäßigen Arbeitspunktes

2

zusammengeschaltet. Am Anzeigeelement 17 steht beim Erreichen des betriebsmäßigen Arbeitspunktes ein optisches Signal an. Vorzugsweise ist das Anzeigeelement 17 an der Schalttafel im Blickbereich des Potentiometers 16 und damit im Blickbereich der Bedienungsperson angeordnet.

In Fig. 2 ist das elektrische Schaltbild der Einstell- und Anzeige-Einrichtung 18 näher veranschaulicht.

Die Einstell- und Anzeigevorrichtung 18 besteht aus zwei parallel geschalteten Komperatoren 19, 20, die über Leitungen 23, 24 und 25, 26 mit in Reihe liegenden Widerständen 27, 28, 29 verbunden sind. Über den Versorgungsanschluß 32 liegt die Einstell- und Anzeige-Einrichtung an 15 Volt Versorgungsspannung an, wobei die Leitungen 33, 34 Versorgungsleitungen der Komperatoren 19, 20 sind.

Die mit den Komperatoren 19, 20 verbundenen und in Reihe liegenden Widerstände 27, 28, 29 bilden einen ohmschen Spannungsteiler.

Mit den Komperatoren 19, 20 wird die am Anschluß 30 anliegende Meßspannung (Ausgangsspannung des bzw. der nicht dargestellten Lichtempfänger der fotoelektrischen Abtasteinrichtung) in Höhe von z.B. 13,5 Volt (einstellbar über Potentiometer 16) mit der vom Spannungsteiler gelieferten Referenzspannung verglichen. Dabei stellen die Teilspannungen der Widerstände 27 von 13,6 Volt und 29 von 13,4 Volt die Empfindlichkeit der Komperatoren 19, 20 dar. Die Ansprechempfindlichkeit (13,4 - 13,6 Volt) kann durch Veränderung der Widerstandswerte der Widerstände 27, 29 erhöht bzw. erniedrigt werden.

Steht am Eingang 30 eine Spannung kleiner 13,6 oder größer 13,4 Volt an, entsteht kein Komperatorausgangssignal. Über die Gleichrichter-Dioden 35, 36 wird zu der Basis des PNP-Transistors 38 über Leitung 39 keine Spannung zugeführt. Der Transistor 38 bleibt durchgeschaltet und das als Leuchtdiode ausgebildete Anzeigeelement 17 leuchtet auf und dokumentiert die richtige Einstellung. Zur Strombegrenzung der Leuchtdiode 17 ist im Stromkreis ein Begrenzungswiderstand 40 vorgesehen. Ändern sich die Betriebsverhältnisse (Papiersorte) und damit die Größe der Meßspannung auf Werte unterhalb 13,4 V bzw. oberhalb 13,6 V, so wird der Transistor 38 über die Komperatoren 19, 20 gesperrt, die Anzeige erlischt und gleichzeitig über nicht näher dargestellte Einrichtungen der Maschine abgeschaltet. Eine Bedienungsperson kann dann zur Erreichung des betriebsmäßigen Arbeitspunktes (13,5 Volt) das an der Schalttafel 14 angeordnete Potentiometer 16 solange verstellen, bis auch bei diesem neuen Betriebsverhältnis die Leuchtdiode aufleuchtet.

## Patentansprüche

1. Fotoelektrische Abtasteinrichtung (10) zum geregelten Nachfahren von vorgegebenen Bahnen für Bearbeitungsmaschinen, insbesondere Brennschneidmaschinen, mit mindestens einem Lichtempfänger, der mit einem Potentiometer (16) zur Einstellung des Lichtempfänger-Arbeitspunktes zusammengeschaltet ist,
dadurch gekennzeichnet,
daß dem Potentiometer (16) ein Anzeigeelement (17) zur optischen Anzeige des Arbeitspunktes zugeordnet ist wobei das Potentiometer (16) zwechs Einstellung zugänglich ist.

2. Fotoelektrische Abtasteinrichtung nach Anspruch 1,
dadurch gekennzeichnet,
daß das Potentiometer (16) an der Schalttafel (14) der Steuerung (10) befestigt ist.

3. Fotoelektrische Abtasteinrichtung nach Anspruch 1 oder 2,
dadurch gekennzeichnet,
daß die Empfindlichkeit (27, 29) des Anzeigeelementes (17) veränderbar ist.

## Claims

1. Photoelectric scanning device (10) for the controlled tracking of given paths for processing machines, in particular flame-cutting machines, with at least one light receiver which is interconnected with a potentiometer (16) for setting of the light receiver operating point, characterized in that a display element (17) for optical display of the operating point is assigned to the potentiometer (16), the potentiometer (16) being accessible for the purpose of setting.

2. Photoelectric scanning device according to Claim 1, characterized in that the potentiometer (16) is fixed on the switchboard (14) of the control (10)

3. Photoelectric scanning device according to Claim 1 or 2, characterized in that the sensitivity (27, 29) of the display element (17) is variable.

## Revendications

1. Dispositif de palpage photoélectrique pour la poursuite régulée de trajectoires prédéterminées par des machines d'usinage notamment des machines d'oxy-coupage, dispositif comportant au moins un photorécepteur qui est combiné à un potentiomètre (16) pour régler le point de fonctionnement du photorécepteur, caractérisé en ce que le potentiomètre (16) comporte un élément d'affichage (17) pour l'affichage optique du point de fonctionnement, le potentiomètre (16) étant accessible pour le réglage.

2. Dispositif de palpage photoélectrique selon la revendication 1, caractérisé en ce que le potentiomètre (16) est fixe sur le tableau de commande (14) du dispositif de commande (10).

3. Dispositif de palpage photoélectrique selon la revendication 1 ou 2, caractérisé en ce que la sensibilité (27, 29) de l'élément d'affichage (17) est modifiable.

FIG.1

# FIG.2